# EUROPEAN PATENT SPECIFICATION

(11) **EP 1 094 207 B1**
(45) Date of publication and mention of the grant of the patent: **14.05.2003**
(21) Application number: 99120742.4
(22) Date of filing: 20.10.1999
(51) Int. Cl.: F01N 3/28, F01N 7/18

(54) **Silencer containing a catalytic device for two-stoke engines and catalytic device therefor**
Schalldämpfer mit katalytischer Vorrichtung für Zweitakt-Brennkraftmaschinen und katalytische Vorrichtung hierfür
Pot de détente avec dispositif catalytique pour moteurs à deux temps et dispositif catalytique pour celui-ci

(43) Date of publication of application: 25.04.2001
(73) Proprietor: OMG AG & Co. KG, 63457 Hanau (DE)
(72) Inventor: Georg Hohn, 10110 Bangkok (TH); Pakon Bovonsombat, 10110 Bangkok. (TH); Wichai Suyod, 10520 Bangkok. (TH)
(74) Representative: Stellbrink, Axel

(56) References cited:
- EP-A- 0 699 829
- WO-A-92/18226
- DE-A- 3 715 040
- DE-A- 4 011 753
- US-A- 5 169 604
- US-A- 5 595 516
- US-A- 5 722 237
- PATENT ABSTRACTS OF JAPAN vol. 1997, no. 01, 31 January 1997 (1997-01-31) & JP 08 246859 A (SUZUKI MOTOR CORP), 24 September 1996 (1996-09-24)
- PATENT ABSTRACTS OF JAPAN vol. 1997, no. 11, 28 November 1997 (1997-11-28) & JP 09 184418 A (KIORITZ CORP), 15 July 1997 (1997-07-15)

## Description

The present invention concerns a silencer for two-stroke engines containing a catalytic device.

Two-stroke engines emit a high amount of hydrocarbons due to incomplete combustion of fuel and lubricating oil added in certain proportions to the fuel. Two-stroke engines therefore contribute a higher proportion to overall air pollution than would be expected from the power rating of the engines. Improvements in exhaust gas cleaning of such engines is therefore mandatory.

Two-stroke engines are widely used in low power applications such as power saws, motor boats, lawn mowers, motor cycles (two-wheelers), and so-called tuk-tuk vehicles (three-wheelers). The vast majority of these vehicles are only equipped with a silencer consisting generally of the exhaust pipe extending into a coaxially aligned silencer housing. The silencer housing comprises a metal cylinder filled with sound absorbing mats. The exhaust pipe being perforated within the region of the silencer housing so that the exhaust gas pulsations may enter the annular space between the exhaust pipe and the housing. Most often, the silencer housing consists of a metal tube being fixed between two flange plates.

There have been made many proposals for catalytic cleaning the exhaust gas of these engines. For example, EP 0431405 Bl describes an exhaust gas purification system for two-stroke engines comprising an outer tube and, arranged therein, a perforated inner tube, that is coated on one or both sides with a catalytically active coating. Between both tubes a gap is formed. This arrangement may be part of the exhaust pipe or part of an expansion chamber. It is capable of reducing carbon monoxide (CO) and hydrocarbon (HC) in the exhaust gas by 30 to 60%. The conversion rates can be further improved by using the tubular catalyst as pre-catalyst for a main catalyst arranged downstream in the exhaust pipe.

EP 0473081 A1 describes an exhaust gas purifying device in which an exhaust gas from an exhaust port of an engine is purified by a catalyst plate means provided with a catalyst. The catalyst plate is disposed in a cylindrical muffler which forms part of an exhaust pipe section connected to the engine exhaust gas port. The catalyst plate is disposed so as to extend throughout a longitudinal direction of the exhaust pipe section at substantially a diametrically central portion in cross section of the exhaust pipe section.

US 5,595,516 describes a catalytic exhaust system for an outboard motor wherein the catalyst is positioned in the drive shaft housing to remove this source of heat from the power head. The catalyst is mounted by a flange assembly and may be easily removed for servicing.

JP 08246859 describes a catalyst installing structure of a motorcycle by which a catalyst single body can be easily replaced. The installing structure comprises a cover body and a catalyst integrally installed on an inside surface of the cover body. The cover body is removably mounted to a replacing hole of a muffler in such a way that the catalyst is extending into the interior of the muffler.

The DE 3715040 A1 describes a catalyst manufactured from a metal web which is spirally wound and comprises punched holes with protruding peripheries for improved catalytic activity.

The known exhaust gas cleaning devices are not suitable for being retrofitted to the exhaust systems of millions of existing motorcycles and tuk-tuk vehicles thus leaving the exhaust gas of these vehicles uncleaned.

The present invention is directed to providing a silencer for two-stroke engines containing a catalytic device which is very cost effective and which allows for easy and quick exchange of the catalytic device. Moreover, existing silencers of tuk-tuk vehicles can be easily converted into silencers according to the invention by retrofitting the catalytic device to them.

The above-mentioned objects are solved by a silencer for two-stroke engines containing a catalytic device, the silencer comprising:
a) an elongated silencer housing (50) having a front end and an exit plane (52),
b) an exhaust pipe (20) extending with its outlet end into said silencer housing from said front end and having at its outlet end a terminal flange (22), said terminal flange being recessed with respect to said end plane (52) and the portion of the exhaust pipe inside the silencer housing having perforations (24),
c) a discharge unit (40) comprising an outlet plate (41) and a tail pipe (42) so as to allow for the discharge of the exhaust gas,
the end plane (52) of said housing being closed by said discharge unit by fastening its outlet plate to said terminal flange (22) in a removable manner thereby pressing said outlet plate against the circumferential rim of said silencer housing.

The silencer is characterised in that the silencer further contains a catalytic device (60) comprising a cylindrical monolithic carrier coated with a catalytic coating and said carrier having a mounting flange (62) fixed thereto, said mounting flange being exchangeably secured to said terminal flange of the exhaust pipe, so as to allow an easy and quick replacement of said catalytic device.

For improving the sound deadening property of the silencer the sound deadening space between the silencer housing and the exhaust pipe may be filled with a sound absorbing mat.

The advantages of the proposed silencer are the following:
- easy retrofitting of the catalytic device to already existing exhaust systems of tuk-tuk vehicles to transform their silencers to silencers according to the invention, thereby offering a high potential for fast reduction of pollutants from the current fleet of tuk-tuk vehicles;
- fast replacement of the catalytic device in case of fatal damage to the catalytic coating;
- reduced fouling of the perforated zone of the exhaust pipe and of the sound absorbing mat due to effective conversion of lubrication oils and fuel hydrocarbons contained in the exhaust gas and thereby lengthening the maintenance interval for these mats;
- minimum influence of the inserted catalytic device on the back pressure generated by the silencer;
- very cost effective.

Some specific embodiments of the silencer will now be described with reference to figures 1 to 8 to further elucidate the present invention.
- **Figure 1:**: is a side schematic view of an exhaust gas cleaning system of a two-stroke engine.
- **Figure 2:**: is a side sectioned view of the silencer according to the invention
- **Figure 3:**: is a side sectioned view of the exhaust pipe
- **Figure 4:**: is a side sectioned view of the silencer housing
- **Figure 5 a):**: is a side sectioned view of the first embodiment of the catalytic device for cleaning the exhaust gas *from* pollutants

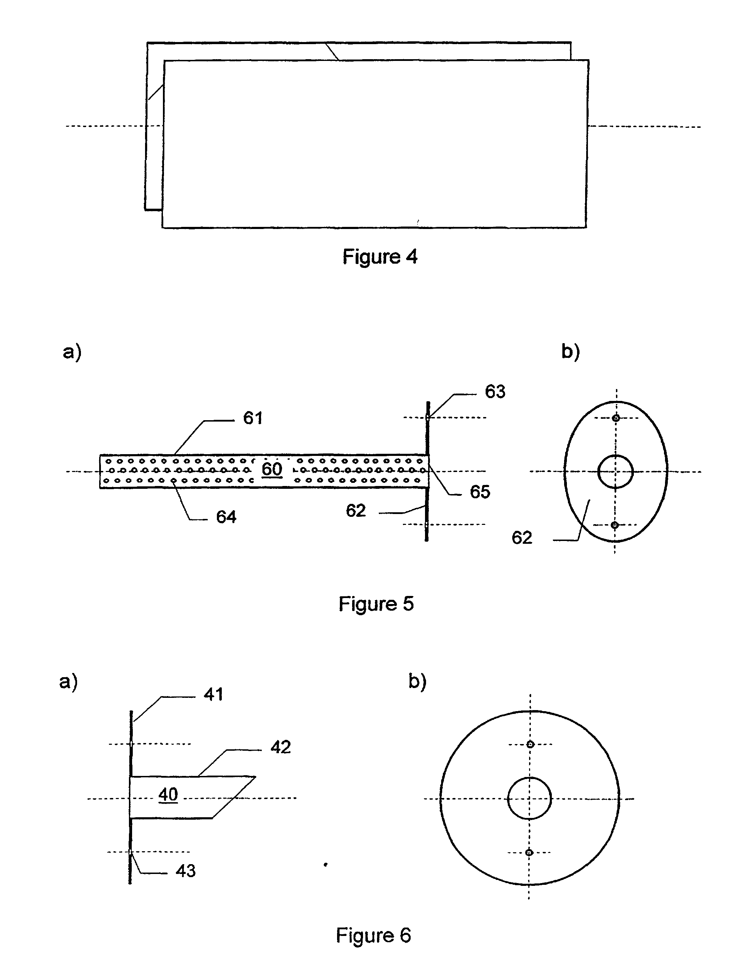

- **Figure 5 b):**: is a front view onto the mounting flange of the catalytic device
- **Figure 6 a):**: is a side sectioned view of the discharge unit of the silencer
- **Figure 6 b):**: is a front view onto the outlet plate of the discharge unit

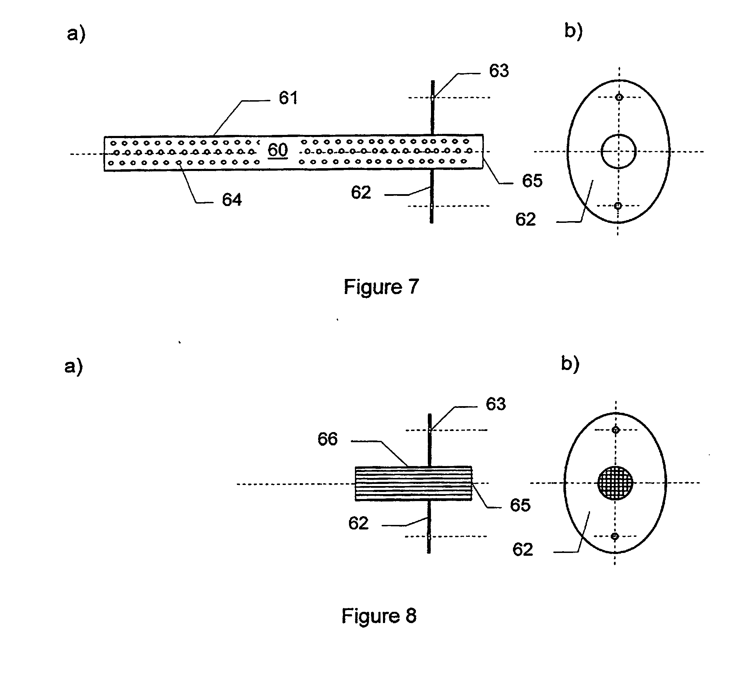

- **Figure 7:**: alternative catalytic device according to the first embodiment of the invention
- **Figure 8 a):**: is a side sectioned view of the second embodiment of the catalytic device for cleaning the exhaust gas from pollutants
- **Figure 8 b):**: is a front view onto the mounting flange of the catalytic device

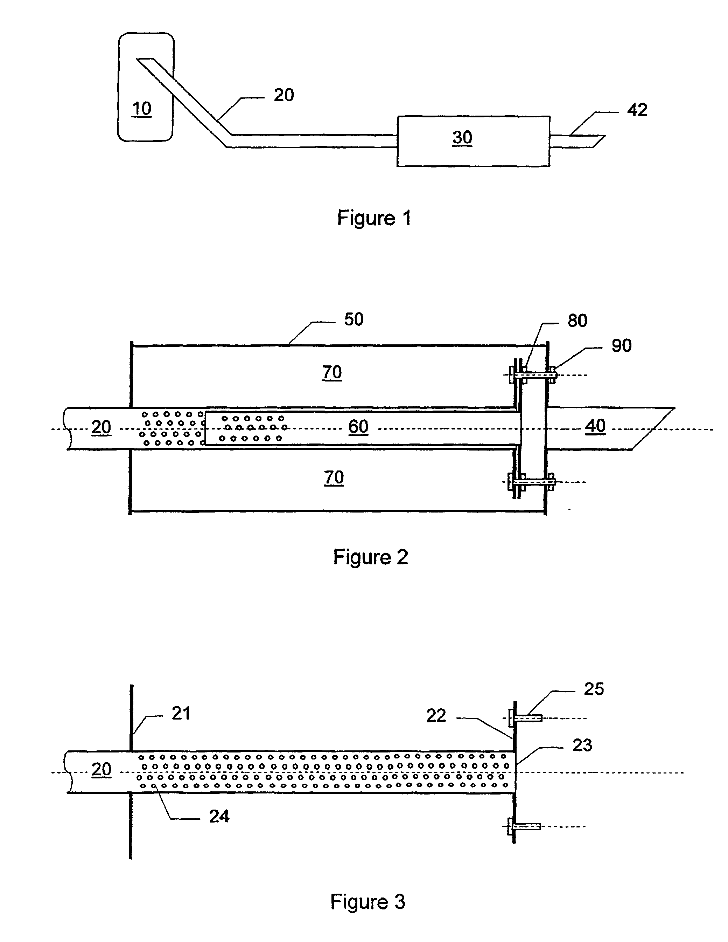

Figure 1 is a side schematic view of an exhaust gas system of a two-stroke engine (10). The exhaust gas of the engine is discharged into the exhaust pipe (20) and is then flowing through the silencer (30). From the silencer the exhaust gas is discharged to the atmosphere via tail pipe (42).

The silencer of the present invention is based on existing exhaust gas systems of tuk-tuk vehicles.

Figure 2 is a side sectioned view of a specific embodiment of the silencer of the present invention wherein the silencer housing is a simple tube clamped between two plates and filled with sound absorbing mats in the space between the exhaust pipe and the silencer housing. The silencer is assembled from four individual sub-systems:
- the exhaust pipe (20),
- the silencer housing (50),
- the catalytic device (60), and
- discharge unit (40).

Figures 3 to 7 are provided for showing these sub-systems in detail. Referring now to figure 3, there is shown a side sectioned view of part of the exhaust pipe (20). The exhaust pipe has an inlet end, not shown here, and an outlet end (23). The exhaust gas is flowing through this pipe from the inlet to the outlet end. Fixed to the outlet end of the exhaust pipe is a terminal flange (22).

The part of the exhaust pipe shown in figure 3 is an elongated straight portion of the exhaust pipe upstream from its outlet end. The exhaust pipe has an additional flange (21) fixed to the exhaust pipe upstream of the terminal flange but downstream from the inlet end. The diameter of the terminal flange is smaller than that of the upstream flange (21) so that it fits into the silencer housing. The flanges may be fixed to the exhaust pipe by any suitable means such as welding or soldering. The portion of the exhaust pipe between the upstream flange and terminal flange has perforations (24) distributed over its jacket surface.

In figure 4 there is shown a side sectioned view of the silencer housing (50). The silencer housing has the form of an elongated tube. In this specific embodiment both, the front end plane (51) and exit plane (52) of the tube are open. The cross section of the silencer tube being of any convenient shape, preferably circular. The cross sections of the upstream flange (21) and of the outlet plate (41) of discharge unit (40) shown in figure 6 correspond to the cross section of the silencer housing but are slightly larger so as to allow the silencer housing being clamped between the upstream flange and the outlet plate of the discharge unit in a gas-tight manner.

In the assembled state the outlet end (23) of the exhaust pipe with terminal flange (22) is located within the silencer housing. The terminal flange lies parallel to the end plane (52) of the silencer housing but is recessed to it to accommodate the mounting flange (62) of the catalytic device (60) shown in figure 5 a) in the space formed between terminal flange (22) of the exhaust pipe and outlet plate (41) of discharge unit (40).

For clamping the silencer housing between the upstream flange and the outlet plate of the discharge unit the terminal flange (22) of the exhaust pipe may be equipped with bores through which threaded bolts (25) are extending outwardly of the silencer housing. Preferably only two threaded bolts are fixed to terminal flange (22). But depending on the required rigidity of the silencer three or more threaded bolts may be provided.

Figure 5 a) and b) show details of one embodiment of the catalytic device according to the invention. The catalytic device of figure 5 is a monolithic catalyst comprising a perforated or punched tube (61) with perforations (64) which has an outer diameter less than the inner diameter of the exhaust pipe and is equipped with a mounting flange (62) which corresponds to the terminal flange (22) of the exhaust pipe. In the embodiment of the catalytic device shown in figure 5 the mounting flange (62) is fixed flush with the outlet end (65) of the perforated tube.

The mounting flange (62) has through bores (63) which correspond to the threaded bolts of terminal flange (22). The perforated tube of the catalytic device is coated on one or both sides with a suitable catalyst for converting the pollutants contained in the exhaust gas into harmless substances.

Figure 6 a) and b) show a side sectioned view of the discharge unit (40) comprising an outlet plate (41) and a tail pipe (42) fixed thereto. The form of the outlet plate corresponds to the cross section of the silencer housing so that the silencer housing can be closed with this outlet plate in a gas-tight manner. For discharge of the exhaust gas the outlet plate is provided with tail pipe (42).

Through bores (43) are provided in the outlet plate to accommodate the threaded bolts of flange plate (22).

Returning now to figure 2, the cooperation of the four sub-systems will be described in more detail. As shown in figure 2, the perforated tube of the catalytic device (60) is inserted into the exhaust pipe from the side of terminal flange (22) until its mounting flange (62) rests on terminal flange (22) while the threaded bolts extend through the through bores (63) of mounting flange (62). The mounting flange may be fixed exchangeably to the terminal flange by fastening nuts (80) onto the threaded bolts.

The silencer housing (50) is clamped between upstream flange (21) and outlet plate (41) in a gas tight manner by fastening nuts (90) onto the threaded bolts.

The space (70) formed between exhaust pipe and silencer housing may be filled with a sound absorbing mat. For the sake of clarity this mat is not shown in figure 2. The sound carried with the exhaust gas enters the sound absorbing mats through the perforations (24) of the exhaust pipe and gets absorbed by the mat.

The catalytic device is an important part of the silencer. Several embodiments will be described in the following.

The catalytic device comprises a cylindrical monolithic carrier coated with a catalytic coating. Said monolithic carrier comprises a cylindrical axis, a jacket surface and an entrance and an exit plane for the exhaust gas. This carrier is exchangeably mounted to the silencer. For that purpose a mounting flange oriented perpendicular to the cylinder axis of the monolithic carrier is fixed to its jacket surface.

In a first embodiment which has already been discussed with respect to figure 5, the monolithic carrier is comprised of a perforated or punched tube coated with a catalyst and having an outer diameter less than the inner diameter of the exhaust pipe. This perforated tube may extend from the terminal flange of the exhaust pipe in an upstream direction into the exhaust pipe (see figure 2). It may also extend from the terminal flange in a downstream direction into the tail pipe of the discharge unit. According to figure 7 it is also possible to have the perforated tube extending both ways from the mounting flange (62) in an upstream and a downstream direction.

Exhaust gas cleaning is effected by contact with the catalytic coating of the catalytic device. The perforations may be of any convenient cross section. They serve to enhance the turbulence of the gas flow and thus the contact of the gas with the catalytic coating. To further improve this function the perforations may have protrusions above or below the jacket surface of the tube. The perforations also allow exhaust gas exchange with the annular sound deadening space between the silencer housing and the exhaust pipe so as to not disturb the silencing function of the silencer too much by the catalytic device.

The length of the perforated tube of the catalytic device may be determined according to the desired degree of pollutants conversion. The perforations may be restricted to certain zones of the tube. These zones should lie within those ranges of the exhaust pipe which have perforations, too, in order to allow gas exchange with the sound deadening space between the exhaust pipe and the silencer housing.

The total hole area of the perforations may occupy 10 to 80% of the jacket surface of the tube. Below 10%, the catalytic device influences the silencing function of the silencer too much. Above 80% the remaining jacket surface with the catalytic coating thereon is too small to yield an efficient exhaust gas cleaning. Perforations with circular cross section having a diameter of 3 mm and a pitch distance of 6 mm and perforations with a diameter of 2 mm and a pitch of 3.5 mm have given sufficient pollutants reduction in the emissions of two-stroke engines.

According to a second embodiment of the catalytic device the monolithic carrier is comprised of a honeycomb type body (66) as shown in figure 8 carrying a catalyst coating thereon. Again, the honeycomb carrier may extend from the terminal flange plate upstream or downstream or both ways into the exhaust pipe or tail pipe. This requires the outer diameter of the monolithic carrier to be smaller than the inner diameter of the exhaust pipe or of the tail pipe. Most preferably these honeycomb carriers may be located in the space between the terminal flange plate and the outlet plate of the discharge unit rather than extending into the exhaust pipe.

Honeycomb type monolithic catalyst carriers are conventional in the exhaust gas cleaning of four-stroke engines. They may be manufactured by extrusion of ceramic materials or from thin corrugated metal foils as is well known in the art. Such honeycomb structures have a plurality of parallel flow ducts for the exhaust gas extending from its entrance face to its exit face. The number of flow ducts per unit cross section of the honeycomb body is called cell density. Typical cell densities of such honeycomb carriers range between 10 and 200 cm⁻². To keep the back pressure exerted on the exhaust gas flow as low as possible cell densities below 62 cm⁻² are recommended for the silencer of the present invention. To further reduce the back pressure the honeycomb carriers may be provided with a central bore of a suitable diameter. The diameter of the bore may be as large so that only one layer of flow ducts remain at the periphery of the monolithic catalytic device.

Due to their larger geometrical surface area the length of the honeycomb carriers may be much less than that of the perforated tube type catalytic device.

The monolithic carriers described above are coated with a suitable catalytic coating for effecting pollutants conversion. In case of the honeycomb carriers the walls of the flow ducts are coated with the catalyst. The techniques for coating honeycomb carriers are well known to the expert. A typical catalytic coating for cleaning the exhaust gas of two-stroke engines will consist of a mixture of alumina and ceria containing platinum and rhodium in a mass ratio of 1:1 to 20:1. The mass ratio of alumina to ceria may range between 70:30 to 40:60. Alumina and ceria may be stabilized against thermal degradation in a known manner by doping them with stabilizers selected from zirconia, baria and lanthana or mixtures therefrom. The concentration of the catalytic coating on the catalytic tube preferably is chosen between 0,5 and 5 grams per square meter of tube surface. Hydrocarbon conversion from 30 to 70% can be achieved with such a coating.

Retrofitting or exchange of a spent catalytic devices can be done in the following way:
- at first, unscrew nuts (90) of screw bolts (25),
- tear off discharge unit (40) and silencer housing (50),
- if present, unscrew nuts (80) to remove the spent catalytic device (60),
- if necessary, exchange the spent sound absorbing mat,
- insert the new catalytic device into the outlet pipe (20) and fix its mounting flange to the terminal flange of the exhaust pipe by fastening nuts (80),
- slide the silencer housing (50) over the sound absorbing mat,
- reassemble discharge unit (40)
- fix the silencer housing by fastening nuts (90) onto the threaded bolts (25).

## Claims

1. Silencer for two-stroke engines containing a catalytic device, the silencer comprising:
a) an elongated silencer housing (50) having a front end and an exit plane (52),
b) an exhaust pipe (20) extending with its outlet end into said silencer housing from said front end and having at its outlet end a terminal flange (22), said terminal flange being recessed with respect to said end plane (52) and the portion of the exhaust pipe inside the silencer housing having perforations (24),
c) a discharge unit (40) comprising an outlet plate (41) and a tail pipe (42) so as to allow for the discharge of the exhaust gas, the end plane (52) of said housing being closed by said discharge unit by fastening its outlet plate to said terminal flange (22) in a removable manner thereby pressing said outlet plate against the circumferential rim of said silencer housing,
**characterised in that**, the silencer further contains a catalytic device (60) comprising a cylindrical monolithic carrier coated with a catalytic coating and said carrier having a mounting flange (62) fixed thereto, said mounting flange being exchangeably secured to said terminal flange of the exhaust pipe, so as to allow an easy and quick replacement of said catalytic device.

2. Silencer according to claim 1, **characterized in that** said monolithic carrier is comprised of a perforated tube (61) with a catalyst coating thereon having an outer diameter less than the inner diameter of said exhaust pipe (20) and extending into said exhaust pipe.

3. Silencer according to claim 1,
**characterized in that** said monolithic carrier is comprised of a honeycomb type cylinder (66) with a catalyst coating thereon having an outer diameter less than the inner diameter of said exhaust pipe and extending upstream of said second flange plate (22) into said exhaust pipe (20).

4. Silencer according to claim 1,
**characterized in that** said monolithic carrier is comprised of a honeycomb type cylinder (66) with a catalyst coating thereon having an outer diameter less than the inner diameter of said tail pipe and extending downstream of said third flange plate (63) into said tail pipe (42).

5. Silencer according to claim 3 or 4,
**characterized in that** said honeycomb type cylinder has a central bore.

6. Silencer according to anyone of the preceding claims,
**characterized in that** the space formed between said exhaust pipe and said silencer housing being filled with a sound absorbing mat.

## Patentansprüche

1. Schalldämpfer für Zweitaktmotoren mit einer Katalysatorvorrichtung, wobei der Schalldämpfer aufweist :
a) ein längliches Schalldämpfergehäuse (50) mit einem vorderen Ende und einer Endebene (52);
b) ein Abgasrohr (20), das sich mit seinem Auslaßende vom vorderen Ende in das Schalldämpfergehäuse erstreckt und an seinem Auslaßende einen Endflansch (22) aufweist, wobei der Endflansch bezüglich der Endebene (52) vertieft angeordnet ist und der innerhalb des Schalldämpfergehäuses angeordnete Abschnitt des Abgasrohrs Perforierungen (24) aufweist;
c) eine Auslaßeinheit (40) mit einem Auslaßflansch (41) und einem Endrohr (42) zum Abgeben des Abgases;
wobei die Endebene (52) des Gehäuses durch die Auslaßeinheit geschlossen ist, indem der Auslaßflansch der Auslaßeinheit auf entfernbare Weise am Endflansch (22) befestigt ist, wodurch der Auslaßflansch gegen den Umfangsrand des Schalldämpfergehäuses gedrückt wird;
**dadurch gekennzeichnet, daß**
der Schalldämpfer ferner eine Katalysatorvorrichtung (60) aufweist, die einen mit einem katalytischen Material beschichteten zylinderförmigen, monolithischen Träger aufweist, wobei der Träger einen daran befestigten Halterungsflansch (62) aufweist, wobei der Halterungsflansch am Endflansch des Abgasrohrs lösbar befestigt ist, so daß die Katalysatorvorrichtung leicht und schnell ersetzt werden kann.

2. Schalldämpfer nach Anspruch 1,
**dadurch gekennzeichnet, daß** der monolithische Träger ein perforiertes Rohr (61) mit einer darauf aufgebrachten Katalysatorbeschichtung aufweist, wobei das Rohr einen Außendurchmesser aufweist, der kleiner ist als der Innendurchmesser des Abgasrohrs (20) und sich in das Abgasrohr erstreckt.

3. Schalldämpfer nach Anspruch 1,
**dadurch gekennzeichnet, daß** der monolythische Träger einen Zylinder (66) mit einer Wabenstruktur und eine auf dem Zylinder aufgebrachte Katalysatorbeschichtung aufweist, wobei der Außendurchmesser des Zylinders kleiner ist als der Innendurchmesser des Abgasrohrs und sich strömungsaufwärts von einer zweiten Flanschplatte (22) in das Abgasrohr (20) erstreckt.

4. Schalldämpfer nach Anspruch 1,
**dadurch gekennzeichnet, daß** der monolythische Träger einen Zylinder (66) mit Wabenstruktur und eine auf dem Zylinder aufgebrachte Katalysatorbeschichtung aufweist, wobei der Außendurchmesser des Zylinders kleiner ist als der Innendurchmesser des Endrohrs und sich strömungsabwärts von einer dritten Flanschplatte (63) in das Endrohr (42) erstreckt.

5. Schalldämpfer nach Anspruch 3 oder 4,
**dadurch gekennzeichnet, daß** der Zylinder mit Wabenstruktur eine mittige Öffnung aufweist.

6. Schalldämpfer nach einem der vorangehenden Ansprüche,
**dadurch gekennzeichnet, daß** der zwischen dem Abgasrohr und dem Schalldämpfergehäuse gebildete Raum mit einer schalldämpfenden Matte gefüllt ist.

## Revendications

1. Silencieux pour moteur à deux temps, contenant un dispositif catalytique, le silencieux comprenant :
a) un corps de silencieux (50) de forme allongée ayant une extrémité avant et un plan de sortie (52),
b) un tuyau d'échappement (20) qui est engagé par son extrémité de sortie dans le corps de silencieux à partir de l'extrémité avant et ayant à son extrémité de sortie un flasque d'extrémité (22), le flasque d'extrémité étant en retrait par rapport au plan d'extrémité (52) et la partie du tuyau d'échappement située à l'intérieur du corps du silencieux présentant des perforations (24),
c) une unité d'évacuation (40) comprenant une plaque de sortie (41) et un tuyau arrière (42) pour permettre l'évacuation du gaz d'échappement,
le plan d'extrémité (52) du corps étant fermé par l'unité d'évacuation par le fait que sa plaque de sortie est fixée au flasque d'extrémité (22) de façon détachable, avec pour effet de presser la plaque de sortie contre le rebord circonférentiel du corps du silencieux,
**caractérisé en ce que**
le silencieux contient en outre un dispositif catalytique (60) comprenant un support monolithique cylindrique revêtu d'un revêtement catalytique, le support ayant un flasque de montage (62) qui y est fixé, le flasque de montage étant fixé de façon interchangeable au flasque d'extrémité du tuyau d'échappement, de manière à permettre le remplacement facile et rapide du dispositif catalytique.

2. Silencieux selon la revendication 1,
**caractérisé en ce que**
le support monolithique est composé d'un tube perforé (61) portant un revêtement catalytique, qui présente un diamètre extérieur plus petit que le diamètre intérieur du tuyau d'échappement (20) et qui est engagé dans ce tuyau d'échappement.

3. Silencieux selon la revendication 1,
**caractérisé en ce que**
le support monolithique est composé d'un cylindre du type à nid d'abeille (66) portant un revêtement catalytique, qui présente un diamètre extérieur plus petit que le diamètre intérieur du tuyau d'échappement et qui s'étend en amont de la deuxième plaque flasque (22), en s'engageant dans le tuyau d'échappement (20).

4. Silencieux selon la revendication 1,
**caractérisé en ce que**
le support monolithique est composé d'un cylindre du type à nid d'abeille (66) portant un revêtement catalytique, qui présente un diamètre extérieur plus petit que le diamètre intérieur du tuyau arrière et qui s'étend en aval de la troisième plaque flasque (63), en s'engageant dans le tuyau arrière (42).

5. Silencieux selon la revendication 3 ou 4,
**caractérisé en ce que**
le cylindre du type à nid d'abeille présente un perçage central.

6. Silencieux selon une quelconque des revendications précédentes,
**caractérisé en ce que**
l'espace formé entre le tuyau d'échappement et le corps du silencieux est rempli d'un mat absorbant les sons.
